# EUROPEAN PATENT APPLICATION

(11) **EP 2 034 725 A2**
(43) Date of publication of application: **11.03.2009**
(21) Application number: 08153635.1
(22) Date of filing: 28.03.2008
(51) Int. Cl.: H04N 7/16

(54) **Signal Processing Apparatus and Control Method Thereof**

(30) Priority: 06.09.2007 KR 20070090454
(71) Applicant: Samsung Electronics Co., Ltd., Suwon-si, Gyeonggi-do 442-742 (KR)
(72) Inventor: Son, Tae-yong, Suwon-si, Gyeonggi-do (KR)
(74) Representative: Clark, David James

(57) **Abstract**

A signal processing apparatus includes: a communication unit (203) which communicates with another signal processing apparatus storing an encoded first certificate; and a controller (213) which accesses the other signal processing apparatus through the communication unit (203), copies the first certificate stored in the other signal processing apparatus and decodes the copied first certificate.

## Description

### BACKGROUND OF THE INVENTION

### 1. Field of the Invention

Apparatuses and methods consistent with the present invention relate to signal processing in which interactive broadcasting with a data broadcasting signal including data information is performed.

### 2. Description of the Related Art

Generally, a signal processing apparatus receives a broadcasting signal from broadcasting stations and processes the signal. As digital broadcasting has commenced in full-scale in recent years, interactive broadcasting is realized, in which broadcasting stations transmit data broadcasting signals including various data information and a user uses data information included in the data broadcasting signal received through digital televisions (TVs), digital set-top boxes, etc.

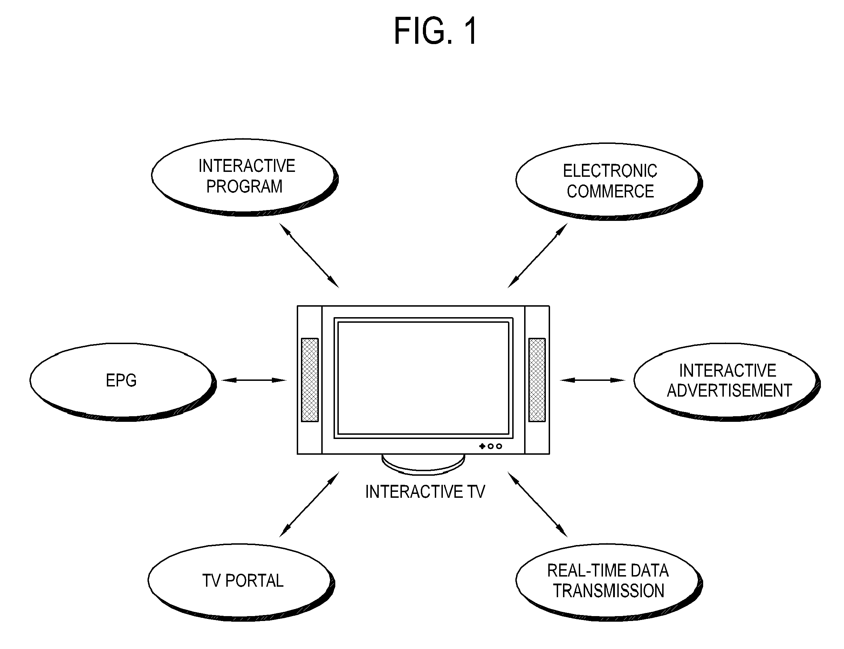

FIG. 1 illustrates an example of interactive broadcasting service. As shown therein, the interactive broadcasting service may include interactive programs such as electronic vote encouraging viewers' participation, electronic commerce selling goods on TVs, interactive advertisement, real-time data transmission, TV portals providing an information search or a community function, an electronic program guide (EPG), etc.

The electronic commerce facilitates commercial transactions over electronic systems and has came to include e-commerce using a personal computer (PC), T-commerce using a TV, and M-commerce using a mobile communication device. Particularly, the T-commerce is a service in which a user selects desired goods while watching TV, and a broadcaster links a user with a seller selling the goods, by using data information included in the selected data broadcasting signal.

In this case, a user needs a certificate to make a safe payment in purchasing the selected goods. The certificate which certifies a user is stored in the signal processing apparatus or a portable device such as a universal serial bus (USB) storage device to be used for electronic payment.

If the certificate is stored in the signal processing apparatus, a user can make a payment only from the signal processing apparatus storing the certificate therein. That is, if a user desires to make the payment in other signal processing apparatuses, the user should download the certificate again since other apparatuses do not have the certificate therein.

If the certificate is stored in the portable device, a user may conveniently make the payment from other apparatuses. However, a user should have the portable device storing the certificate with him/her whenever the user wants to make the payment.

### SUMMARY OF THE INVENTION

Exemplary embodiments of the present invention aim to overcome the above disadvantages and other disadvantages not described above.

According to an aspect of the present invention, there is provided a signal processing apparatus, comprising: a communication unit which communicates with another signal processing apparatus storing an encoded first certificate; and a controller which accesses the other signal processing apparatus through the communication unit, copies the first certificate stored in the other signal processing apparatus and decodes the copied first certificate.

The signal processing apparatus may further comprise a storage unit which stores a second certificate therein, wherein the controller determines whether the storage unit stores the second certificate therein, and accesses the other signal processing apparatus through the communication unit to copy the first certificate if the storage unit does not store the second certificate therein.

The signal processing apparatus may further comprise a receiver which receives a data broadcasting signal including data information; a processor which processes a data broadcasting signal; and a user input unit which is used to select an electronic commerce function purchasing a product with the data information, wherein the controller determines whether the storage unit stores the second certificate therein if the electronic commerce function is selected through the user input unit while the data broadcasting signal received through the receiver is processed by the processor.

The controller may control the communication unit to access the other signal processing apparatus based on a media access control (MAC) address of the other signal processing apparatus.

The controller may receive a decoding key corresponding to the first certificate from the other signal processing apparatus through user certification and decodes the first certificate.

The controller may discard the decoded first certificate after being used.

The first certificate may be encoded and decoded by one of a data encryption standard (DES) algorithm and a 3-DES algorithm.

According to another aspect of the present invention, there is provided a control method of a signal processing apparatus, comprising: accessing another signal processing apparatus which stores an encoded first certificate therein; copying the first certificate stored in the other signal processing apparatus; and decoding the copied first certificate.

The accessing the other signal processing apparatus may comprise determining whether a second certificate is stored, and accessing the other signal processing apparatus if the second certificate is not stored.

The control method may further comprise receiving a data broadcasting signal including data information; and processing the data broadcasting signal, wherein the determining whether the second certificate is stored comprises selecting an electronic commerce function purchasing a product with the data information while the data broadcasting signal received through a receiver is processed by a processor.

The accessing the other signal processing apparatus may comprise receiving an MAC address of the other signal processing apparatus.

The decoding the first certificate may comprise receiving a decoding key from the other signal processing apparatus through user certification corresponding to the first certificate.

The control method may further comprise discarding the decoded first certificate after being used.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates an example of an interactive broadcasting service;
FIG. 2 is a control block diagram of a signal processing system including a signal processing apparatus according to an exemplary embodiment of the present invention; and
FIG. 3 is a flowchart to describe a control process of the signal processing apparatus according to an exemplary embodiment of the present invention.

### DETAILED DESCRIPTION OF EXEMPLARY EMBODIMENTS

Hereinafter, exemplary embodiments of the present invention will be described with reference to accompanying drawings.

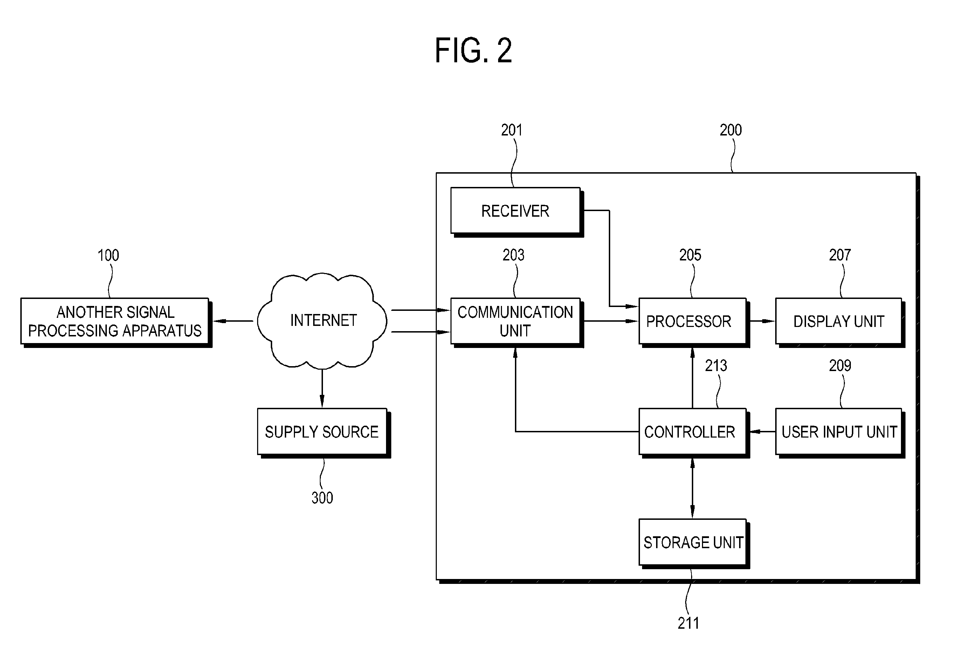

FIG. 2 is a control block diagram of a signal processing system which includes a signal processing apparatus 200 according to an exemplary embodiment of the present invention. The signal processing system also includes an other signal processing apparatus 100.

The other signal processing apparatus 100 according to the present exemplary embodiment stores a first certificate to certify a user to thereby make a payment. The first certificate may include general authorized certificates. The other signal processing apparatus 100 stores encoded first certificate for security, and additionally stores a decoding key to decode the encoded first certificate. The first certificate may be encoded and decoded by DES (data encryption standard), 3-DES, etc.

As shown in FIG. 1, the signal processing apparatus 200 according to the present exemplary embodiment includes a receiver 201, a communication unit 203, a processor 205, a display unit 207, a user input unit 209, a storage unit 211 and a controller 213.

The receiver 201 receives a broadcasting signal, and includes a tuning unit (not shown). The tuning unit may include a single tuner or a plurality of tuners, a demodulator to demodulate a tuned signal, a decoder, a multiplexer, etc. The tuning unit tunes a broadcasting signal to a frequency band corresponding to a tuning control signal of the controller 213 (to be described later).

The receiver 201 according to the present exemplary embodiment receives a data broadcasting signal including a video signal, an audio signal and data information. The data broadcasting signal may be encoded as a Moving Picture Experts Group (MPEG)-2 transport stream.

For example, the data information is transmitted according to the Advanced Common Application Platform (ACAP) specification and the Open Cable Application Platform (OCAP) specification, i.e., data broadcasting standards of ATSC (advanced television system committee).

The communication unit 203 communicates with the other signal processing apparatus 100 storing the first certificate or with at least one supply source 300 supplying a data broadcasting signal including data information, according to a control of the controller 213. The communication unit 203 may include a network interface such as a network card, and perform communication according to a network protocol such as TCP/IP and HTTP. Also, the receiver 201 and the communication unit 203 may be provided within a single integrated chip (IC)

The supply source 300 supplies a data broadcasting signal, and may include a broadcasting station (e.g., terrestrial wave broadcasting stations, local broadcasting stations and cable broadcasting stations). The broadcasting stations may link sellers such as TV shopping malls and home shopping companies with a user to purchase goods while viewing the data broadcasting signal.

The processor 205 processes the data broadcasting signal received through the receiver 201 to be output by the display unit 207 according to a control of the controller 213. The processor 205 may include a demultiplexer (not shown) which divides the data broadcasting signal into a video signal, an audio signal and data information, a video processor (not shown) which processes the video signal, and an audio processor (not shown) which processes the audio signal.

The processor 205 may have various functions corresponding to a format of the input video signal. For example, the processor 205 may have an analog-to-digital (A/D) conversion function to convert various input video signals into digital video signals in certain formats, a digital decoding function, a scaling function to scale input digital video signals and/or audio signals according to output standards of the display unit 207, i.e. adjusts vertical frequency, resolution and picture ratio of the input signals, and a predetermined format conversion function.

The processor 205 may further include a user interface (UI) generator (not shown) which generates UI menus according to a control of the controller 213.

The display unit 207 displays thereon the data broadcasting signal processed by the processor 205. The display unit 207 may for example comprise a digital light processing (DLP) projector, a liquid crystal display (LCD) and a plasma display panel (PDP). The display unit 207 may be additionally provided as an external device.

The user input unit 209 may include a remote controller having a key or a menu key provided in a casing to select an electronic commerce function. The electronic commerce function is performed to purchase the goods with the data information included in the data broadcasting signal displayed on the display unit 207. The user input unit 209 may include a mouse or a keyboard which is connected with the signal processing apparatus 200.

The storage unit 211 stores a second certificate therein. The storage unit 211 may include a hard disk, a random access memory (RAM), a flash memory, etc. The storage unit 211 may store the first certificate copied from the other signal processing apparatus 100, as the second certificate.

The controller 213 accesses the other signal processing apparatus 100, copies the encoded first certificate therefrom and decodes the copied first certificate. The controller 213 may include a central processing unit (CPU), a microcomputer, etc.

More specifically, the controller 213 controls to perform the electronic commerce with the data information included in the data broadcasting signal if a user selects the electronic commerce function through the user input unit 209 while viewing the data broadcasting signal displayed on the display unit 207.

The electronic commerce according to the present exemplary embodiment is performed by following processes. If a user selects the electronic commerce function through the user input unit 209, the controller 213 controls to display information about the selected goods on the display unit 207, by using the data information included in the data broadcasting signal. If a user purchases the displayed goods, the controller 213 links a user with a seller to sell the goods.

A user should be certified to make a payment with respect to the selected goods. The controller 213 determines whether the storage unit 211 stores the second certificate therein. If the storage unit 211 stores the second certificate therein, the controller 213 functions to make the payment with the stored second certificate.

If the storage unit 211 does not store the second certificate therein, the controller 213 accesses the other signal processing apparatus 100 which stores the first certificate therein. The controller 213 controls the UI generator to generate a UI menu to thereby receive a media access control (MAC) address of the other signal processing apparatus 100. The MAC address is required for performing communication, and may be set during a manufacturing processes or set by a user.

The controller 213 may access the other signal processing apparatus 100 storing the first certificate therein or access a homepage of a bank to download the certificate through user certification, according to user's selection.

If the MAC address of the other signal processing apparatus 100 is input, the controller 213 accesses the other signal processing apparatus 100 based on the input MAC address. The controller 213 then copies the encoded first certificate stored in the other signal processing apparatus 100. The copied first certificate may be stored in the storage unit 211.

If the other signal processing apparatus 100 requires a user to be certified for security, the controller 213 generates a UI to input personal information by a user, and transmits the input personal information to the other signal processing apparatus 100. The other processing apparatus 100 determines whether a user is identical to a user of the first certificate based on the personal information transmitted by the signal processing apparatus 200. If the user certification is completed, the other signal processing apparatus 100 supplies the decoding key to the signal processing apparatus 200 to decode the first certificate.

The controller 213 decodes the copied first certificate using the received decoding key, and controls to make the payment with the decoded first certificate.

If the payment is completed, the controller 213 discards the decoded first certificate so as not to be reused.

Accordingly, if the certificate is not stored in the signal processing apparatus 200, the controller 213 may access the other signal processing apparatus 100 to copy the certificate and make the payment.

As the controller 213 copies the encoded certificate, and receives the decoding key to decode the certificate through the user certification, security problems which can arise during the transmission of the certificate may be solved. After the copied certificate is used, it is discarded so as not to be reused.

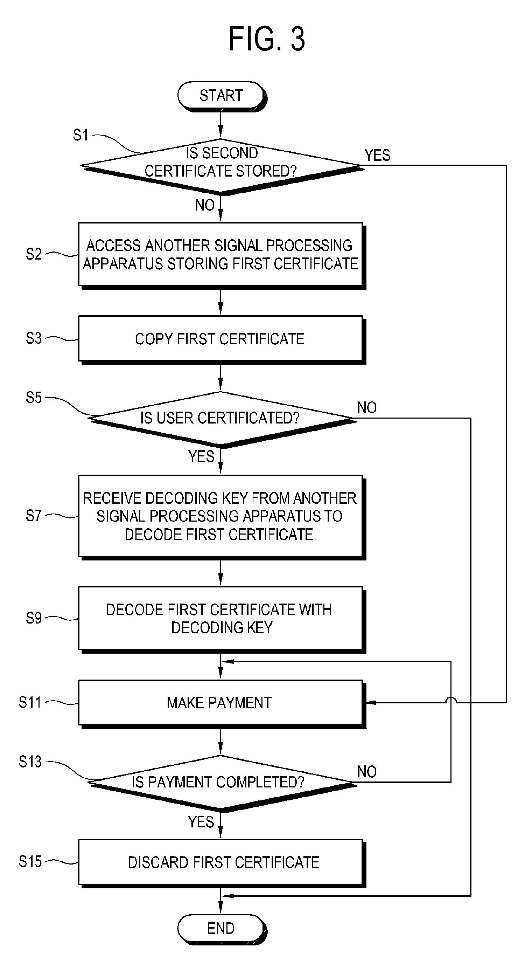

Hereinafter, a control method of the image processing apparatus 200 according to an exemplary embodiment of the present invention will be described with reference to FIG. 3.

As shown therein, the controller 213 determines whether the second certificate is stored in the storage unit 211 (S1). As described above, the controller 213 may determine whether the second certificate is stored, if a user selects the electronic commerce function and makes the payment.

If it is determined at operation S1 that the second certificate is stored in the storage unit 211, the controller 213 makes the payment with the second certificate (S11).

If it is determined at operation S1 that the second certificate is not stored in the storage unit 211, the controller 213 controls the communication unit 203 to access the other signal processing apparatus 100 storing the first certificate therein (S2). The controller 213 may receive the MAC address of the other signal processing apparatus 100 from a user to access the other signal processing apparatus 100.

The controller 213 copies the encoded first certificate stored in the other signal processing apparatus 100 (S3) .

The other signal processing apparatus 100 performs the user certification to determine whether a user is identical to a user of the first certificate. If the other signal processing apparatus 100 completes the user certification (S5), the controller 213 receives the decoding key from the other signal processing apparatus 100 to decode the first certificate (S7).

The controller 213 decodes the first certificate with the received decoding key (S9), and controls to make the payment with the decoded first certificate (S11).

If the payment is completed (S13), the controller 213 discards the decoded first certificate (S15).

Accordingly, if the certificate is not stored in the storage unit 211, the controller 213 may access the other signal processing apparatus 100 storing the certificate to copy the certificate and make the payment.

The encoded certificate is copied, and the decoding key is additionally supplied to decode the certificate through the user certification. Thus, a security problem due to the transmission of the certificate may be solved. Also, the certificate may be prevented from being reused because the copied certificate is discarded after being used.

As described above, according to the exemplary embodiments of the present invention, there are provided a signal processing apparatus which accesses another signal processing apparatus storing a certificate, copies the certificate therefrom and make a payment if a certificate is not stored, and a control method thereof.

Also, according to the exemplary embodiments of the present invention, there are provided a signal processing apparatus which copies an encoded certificate, additionally receives a key through user certification to decode the certificate and solves a security problem possibly arising during certificate transmission, and a control method thereof.

Further, according to the exemplary embodiments of the present invention, there are provided a signal processing apparatus which discards a copied certificate after being used and prevents the certificate from being reused and maintains security, and a control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A signal processing apparatus comprising:
a communication unit (203) which communicates with another signal processing apparatus that stores an encoded first certificate; and
a controller (213) which accesses the other signal processing apparatus through the communication unit (203), copies the first certificate stored in the other signal processing apparatus and decodes the copied first certificate.

2. The signal processing apparatus according to claim 1, further comprising a storage unit (211) in which a second certificate is stored,
wherein the controller (203) determines whether the second certificate is stored in the storage unit (211), and accesses the other signal processing apparatus through the communication unit (203) to copy the first certificate if it is determined that the second certificate is not stored in the storage unit (211).

3. The signal processing apparatus according to claim 2, further comprising:
a receiver (201) which receives a data broadcasting signal comprising data information;
a processor (205) which processes the data broadcasting signal; and
a user input (209) unit which is used to select an electronic commerce function purchasing a product with the data information, wherein
the controller (213) determines whether the second certificate is stored in the storage unit (211) if the electronic commerce function is selected through the user input unit (209) while the data broadcasting signal received through the receiver is processed by the processor (205).

4. The signal processing apparatus according to claim 1, 2 or 3, wherein the controller (213) controls the communication unit (203) to access the other signal processing apparatus based on a media access control address of the other signal processing apparatus.

5. The signal processing apparatus according to any one of claims 1-4, wherein the controller (213) receives a decoding key corresponding to the first certificate from the other signal processing apparatus through user certification and decodes the first certificate.

6. The signal processing apparatus according to any preceding claim, wherein the controller (213) discards the decoded first certificate after use.

7. The signal processing apparatus according to any preceding claim, wherein the first certificate is encoded and decoded by one of a data encryption standard (DES) algorithm and a 3-DES algorithm.

8. A control method of a signal processing apparatus, the control method comprising:
accessing another signal processing apparatus which stores an encoded first certificate therein (S2);
copying the first certificate stored in the other signal processing apparatus (S3); and
decoding the copied first certificate (S9).

9. The control method according to claim 8, wherein the accessing the other signal processing apparatus comprises:
determining whether a second certificate is stored in the signal processing apparatus (S1), and
accessing the other signal processing apparatus if it is determined that the second certificate is not stored in the signal processing apparatus.

10. The control method according to claim 8 or 9, further comprising:
receiving a data broadcasting signal including data information; and
processing the data broadcasting signal,
wherein the determining whether the second certificate is stored in the signal processing apparatus comprises selecting an electronic commerce function purchasing a product with the data information while the data broadcasting signal received through a receiver is processed by a processor.

11. The control method according to claim 8, 9 or 10, wherein the accessing the other signal processing apparatus comprises receiving a media access control address of the other signal processing apparatus.

12. The control method according to claim 8, 9, 10 or 11, wherein the decoding the first certificate comprises receiving a decoding key from the other signal processing apparatus through user certification corresponding to the first certificate (S7).

13. The control method according to any one of claims 8-12, further comprising discarding the decoded first certificate after use(S15).
